# EUROPEAN PATENT APPLICATION

(11) **EP 3 799 040 A1**
(43) Date of publication of application: **31.03.2021**
(21) Application number: 19219976.8
(22) Date of filing: 30.12.2019
(51) Int. Cl.: G10L 15/22, G06F 3/16, G10L 15/08

(54) **SPEECH RECOGNITION CONTROL METHOD AND APPARATUS, ELECTRONIC DEVICE AND READABLE STORAGE MEDIUM**

(30) Priority: 29.09.2019 CN 201910933124
(71) Applicant: Baidu Online Network Technology (Beijing) Co., Ltd., Beijing 100085 (CN)
(72) Inventor: LUO, Yongxi, Beijing, 100085 (CN); WANG, Shasha, Beijing, 100085 (CN)
(74) Representative: Zimmermann, Tankred Klaus

(57) **Abstract**

The present disclosure discloses a speech recognition control method, a speech recognition control apparatus, an electronic device and a readable storage medium. The method includes: querying (101) configuration information of a first operation state to determine whether the first operation state is applicable to the target scene; switching (102; 402) a second operation state to the first operation state in response to determining that the first operation state is applicable to the target scene; in the second operation state, acquiring an audio clip based on a wake-up word to perform speech recognition on the audio clip; and in the first operation state, continuously acquiring (103; 403) audio to obtain an audio stream to perform the speech recognition on the audio stream.

## Description

### FIELD

The present disclosure relates to the field of speech recognition and artificial intelligence, and more particularly, to a speech recognition control method and apparatus, an electronic device and a readable storage medium.

### BACKGROUND

With the continuous development of artificial intelligence and terminal technology and the spread of artificial intelligence products, such as smart speakers and other electronic devices, a user can control an electronic device in voice to execute control instructions. At present, when the user desires to continuously interact with the electronic device, that is, the user has a need to continuously initiate conversations, the user may control the electronic device to enter a preset working mode in voice to experience a full-duplex, wake-up-free function.

However, in some scenes, the user may not have the need to initiate continuous conversations. For example, when the user takes to other users, he/she may unintentionally trigger the control instruction. In this case, the user may be disturbed if the electronic device enters the preset working mode, and thus the user experience may be affected.

### SUMMARY

The present disclosure aims at solving one of the technical problems in the related art at least to some extent.

The present disclosure provides a speech recognition control method, a speech recognition control apparatus, an electronic device and a readable storage medium, so that individual needs of different users may be met as a user may set a scene that triggers a first operation state based on his/her needs. In addition, the device may be controlled to enter the first operation state when the first operation scene is applicable to the target scene, which may reduce interruption to the user and improve the user experience.

An embodiment according to a first aspect of the present disclosure provides a speech recognition control method, including:
in response to detecting that an application programmer interface relevant to a target scene is called, querying configuration information of a first operation state to determine whether the first operation state is applicable to the target scene;
switching a second operation state to the first operation state in response to determining that the first operation state is applicable to the target scene; wherein, in the second operation state, an audio clip is acquired based on a wake-up word to perform speech recognition on the audio clip; and
in the first operation state, continuously acquiring audio to obtain an audio stream to perform the speech recognition on the audio stream.

An embodiment according to a second aspect of the present disclosure provides a speech recognition control apparatus, including:
a querying module, configured to, in response to detecting that an application programmer interface relevant to a target scene is called, query configuration information of a first operation state to determine whether the first operation state is applicable to the target scene;
a switching module, configured to switch a second operation state to the first operation state in response to determining that the first operation state is applicable to the target scene; wherein, in the second operation state, an audio clip is acquired based on a wake-up word to perform speech recognition on the audio clip; and
a recognition module, configured to, in the first operation state, continuously acquire audio to obtain an audio stream to perform the speech recognition on the audio stream.

An embodiment according to a third aspect of the present disclosure provides another speech recognition control method, including:
querying configuration information of a first operation state in a target scene to determine whether the first operation state is applicable to the target scene;
switching a second operation state to the first operation state in response to determining that the first operation state is applicable to the target scene; wherein, in the second operation state, an audio clip is acquired based on a wake-up word to perform speech recognition on the audio clip; and
in the first operation state, continuously acquiring audio to obtain an audio stream to perform the speech recognition on the audio stream.

An embodiment according to a fourth aspect of the present disclosure provides another speech recognition control apparatus, including:
a querying module, configured to query configuration information of a first operation state in a target scene to determine whether the first operation state is applicable to the target scene;
a switching module, configured to switch a second operation state to the first operation state in response to determining that the first operation state is applicable to the target scene; wherein, in the second operation state, an audio clip is acquired based on a wake-up word to perform speech recognition on the audio clip; and
a recognition module, configured to, in the first operation state, continuously acquire audio to obtain an audio stream to perform the speech recognition on the audio stream.

An embodiment according to a fifth aspect of the present disclosure provides an electronic device, including:
at least one processor; and
a memory connected in communication with the at least one processor;
in which the memory is configured to store instructions executable by the at least one processor, and the instructions are executed by the at least one processor such that the at least one processor is configured to execute a speech recognition control method provided by the embodiment according to the first aspect of the present disclosure, or to execute a speech recognition control method provided by the embodiment according to the third aspect of the present disclosure.

An embodiment according to a sixth aspect of the present disclosure provides a non-transitory computer-readable storage medium, having computer instructions stored thereon, in which the computer instructions are executed by a computer such that the computer is configured to execute the speech recognition control method provided by the embodiment according to the first aspect of the present disclosure, or to execute the speech recognition control method provided by the embodiment according to the third aspect of the present disclosure.

An embodiment according to the present disclosure has the following advantages or beneficial effects.

In response to detecting that the application programmer interface relevant to the target scene is called, the configuration information of the first operating state is queried to determine whether the first operation state is applicable to the target scene; the second operation state is switch into the first operation state in response to determining that the first operation state is applicable to the target scene. In the second operation state, the audio clip is acquired based on the wake-up word to perform the speech recognition on the audio clip. In the first operation state, audio is continuously acquired to obtain the audio stream to perform the speech recognition on the audio stream. Consequently, the user may set a scene for triggering the first operation state based on his/her requirement, to meet individual requirements of users. In addition, the device may be controlled to enter the first operation state when the first operation state is applicable to the target scene. Consequently, the disturbance to the user may be reduced and the user experience may be improved.

Other effects of the foregoing optional manners will be described below with reference to specific embodiments.

### BRIEF DESCRIPTION OF THE DRAWINGS

The accompanying drawings are used for a better understanding of the solution, and do not constitute a limitation on the present disclosure. These and other aspects and advantages of embodiments of the present disclosure will become apparent and more readily appreciated from the following descriptions made with reference to the accompanying drawings.
FIG. 1 is a flowchart illustrating a speech recognition control method according to some embodiments of the present disclosure.
FIG. 2 is a schematic diagram illustrating a configuration interface according to some embodiments of the present disclosure.
FIG. 3 is a flowchart illustrating a speech recognition control method according to some embodiments of the present disclosure.
FIG. 4 is a flowchart illustrating a speech recognition control method according to some embodiments of the present disclosure.
FIG. 5 is a flowchart illustrating a speech recognition control method according to some embodiments of the present disclosure.
FIG. 6 is a block diagram illustrating a speech recognition control apparatus according to some embodiments of the present disclosure.
FIG. 7 is a block diagram illustrating a speech recognition control apparatus according to some embodiments of the present disclosure.
FIG. 8 is a block diagram illustrating a speech recognition control apparatus according to some embodiments of the present disclosure.
FIG. 9 is a block diagram of an electronic device according to some embodiments of the present disclosure.

### DETAILED DESCRIPTION

The following describes exemplary embodiments of the present disclosure with reference to the accompanying drawings, and details of the embodiments of the present disclosure are included to facilitate understanding, in which the details should be considered as merely exemplary. Therefore, those skilled in the art should recognize that various changes and modifications may be made to the embodiments described herein without departing from the scope and spirit of the present disclosure. Also, for clarity and conciseness, descriptions of well-known functions and structures are omitted in the following description.

A speech recognition control method, a speech recognition control apparatus, an electronic device and a readable storage medium according to the embodiments of the present disclosure will be described below with reference to the drawings.

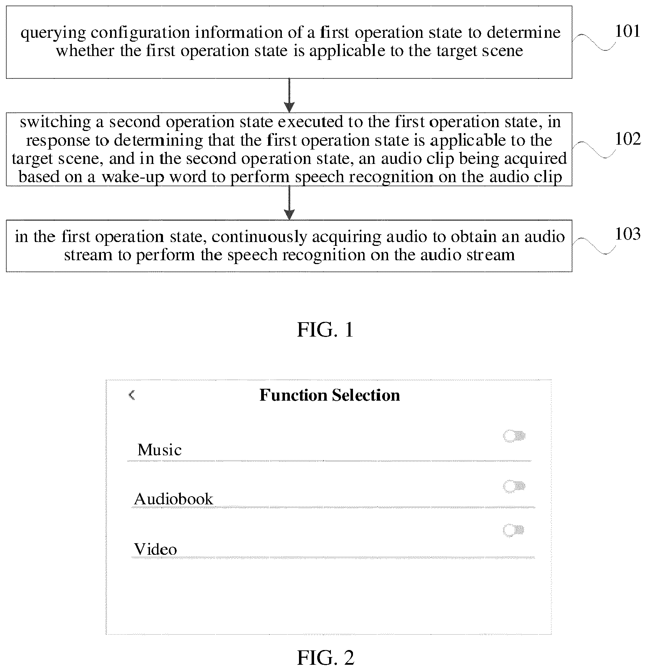

FIG. 1 is a flowchart illustrating a speech recognition control method according to some embodiments of the present disclosure.

As an example, in the present disclosure, the speech recognition control method may be applicable to a speech recognition control apparatus. The speech recognition control apparatus may be applicable to an electronic device which may be configured to perform the speech recognition control method.

The electronic device may be a personal computer (PC), a cloud device, a mobile device, a smart speaker, etc. The mobile device may be a hardware device with an operating system, a touch screen and/or a display, such as a phone, a tablet computer, a personal digital assistant, a wearable device, an on-board device, etc.

As illustrated in FIG. 1, the speech recognition control method may include the following.

At block 101, in response to detecting that an application programmer interface (API) relevant to a target scene is called, configuration information of a first operation state is queried to determine whether the first operation state is applicable to the target scene.

In an example, the target scene is relevant to an application programmer interface (API) currently called by a user. For example, the target scene may be a weather scene, a music scene, a video scene, and so on.

In an example, the first operation state may be a listening state. When the electronic device is in the listening state, the user may input a voice instruction in real time to interact with the electronic device, without inputting a wake-up word. The configuration information of the first operation state may be set by the user based on his/her needs. The configuration information may include a list of scenes to which the first operation state is applicable. The list of scenes may be generated by selecting one or more from various scenes in response to user selection. For example, the list of scenes may be generated, in response to the user selection, by selecting one or more from such as a music scene, an audiobook scene, a video scene, a weather scene, a shopping scene, and the like.

For example, when the application programmer interface is called, the speech recognition apparatus may determine the target scene corresponding to the application programmer interface. When an application is launched and an application programmer interface of the application is called, the speech recognition control apparatus may determine the target scene corresponding to the application programmer interface. In an example, when a weather application is called, the target scene corresponding to the called application programmer interface may be the weather scene. In another example, when an application programmer interface of an instant messaging application is called to query the weather, the target scene corresponding to the application programmer interface may be the weather scene. In another example, when a music application is called, the target scene corresponding to the application programmer interface may be the music scene. In another example, when an application programmer interface of the instant messaging application to play music, the target scene corresponding to the application programmer interface may be the music scene. No more similar examples are given herein.

When monitoring that the application programmer interface relevant to the target scene is called, the speech recognition control apparatus may query the configuration information of the first operation state to determine whether the first operation state is applicable to the target scene. In detail, in a case where the configuration information indicates that the list of scenes that the first operation state is applicable to includes the target scene, it may be determined that the first working scene is applicable to the target scene. In a case where the configuration information indicates that the list of scenes that the first working state is applicable to does not include the target scene, it may be determined that the first operation state is not applicable to the target scene.

As an example, as illustrated in FIG. 2, FIG. 2 is a schematic diagram illustrating a configuration interface according to some embodiments of the present disclosure. The user may select one or more scenes from the music scene, the audiobook scene and the video scene based on his/her needs to generate the list of scenes that the first operation state is applicable to. In a case where the user selects the music scene and the video scene, the list of scenes that the first operation state is applicable to includes the music scene and the video scene. In a case where the target scene is the music scene, it may be determined that the first operation state is applicable to the target scene by querying the configuration information of the first operation state.

It should be noted that FIG. 2 is merely an example, i.e., taking the list of scenes being generated by one or more of the music scene, the audiobook scene and the video scene as an example. In other words, a case that the list of scenes includes at least one of the music scene, the audiobook scene and the video scene is taken as an example. In actual applications, the list of scenes may include other scenes, such as a weather scene, a shopping scene, and the like, which is not limited herein.

At block 102, a second operation state is switched to the first operation state in a case where the first operation state is applicable to the target scene. In the second operation state, an audio clip is acquired based on the wake-up word to perform speech recognition on the audio clip.

In an example, the second operation state may be a non-listening state. When the electronic device is in the non-listening state, a wake-up word may be inputted in voice to wake up the electronic device for subsequent speech recognition. The wake-up word may be preset by a built-in program of the electronic device, or in order to meet personalized needs of the user, the wake-up word may be set by the user based on his/her needs, which is not limited in the present disclosure. For example, the electronic device may be a smart speaker, and the wake-up word may be "Xiaodu, Xiaodu" .

In an example, the electronic device may be in the second operation state, the speech recognition control apparatus may be configured to detect whether the wake-up word is entered. In a case where the wake-up word is entered, the speech recognition control apparatus may be configured to acquire the audio clip following the wake-up word to perform the speech recognition. For example, the electronic device is a smart speaker in the second operation state. When the user wants to play a song via the electronic device, the user may input "Xiaodu, Xiaodu, play song A" or "Xiaodu, Xiaodu, I want to listen to a song" in voice. The electronic device may recognize the audio clip "play song A" or "I want to listen to a song" following the wake-up word to play the song.

In a case where the speech recognition control apparatus determines that the first operation state is applicable to the target scene, the second operation state where the electronic device is in may be switched to the first operation state. In a case where the speech recognition apparatus determines that the first operation state is not applicable to the target scene, the electronic device may keep the second operation state. Therefore, the scene for triggering the first operation state may be set by the user based on his/her needs to meet personalized needs of users. In addition, the device is controlled to enter the first operation state when the first operation state is applicable to the target scene, thereby reducing interruption to the user and improve the user experience.

It should be noted that terms such as "first" and "second" are used herein for purposes of description and are not intended to indicate or imply relative importance or significance. Thus, the feature defined with "first" and "second" may comprise one or more this feature.

At block 103, in the first operation state, audio is continuously collected to obtain an audio stream to perform the speech recognition on the audio stream.

In an example, when the electronic device is in the first operation state, the electronic device may continuously acquire the audio to obtain the audio stream for speech recognition. Therefore, in the first operation state, the user may interact in real time or continuously with the electronic device, without inputting the wake-up word, thereby simplifying operations and improving the user experience.

In related arts, in a case where the user does not interact continuously with the electronic device, a control instruction may be triggered by mistake to control the electronic device to enter a preset operation mode. In this case, the user may be disturbed, thereby deteriorating the user experience.

For example, in a case where a condition for controlling the electronic device to enter the preset operation mode includes that an intention of the speech data input by the user matches a set control intention. The set control intention may be "playing an audio/video". In a case where a user A is talking with a user B as follows. USer A asks "Do you know how to wake up this smart speaker?" and user B answers: "Of course I know, the wake-up word is 'Xiaodu, Xiaodu', and then you can listen to music and watch movies". During the taking, the smart speaker may recognize the speech data from the user B, detects that the wake-up word "Xiaodu, Xiaodu" is input, and recognizes that the intention of the speech data input by the user B is "listen to music and watch movies" which matches the set control intention. The smart speaker may play music or movies, which may disturb users, since the users do not want to play music and movies via the smart speaker.

With the speech recognition control method according to embodiments of the present disclosure, in response to detecting that the application programmer interface relevant to the target scene is called, the configuration information of the first operation state is queried i to determine whether the first operation state is applicable to the target scene. The second operation state is switched to the first operation state, in a case where the first operation state is applicable to the target scene. In the second operation state, the audio clip is acquired based on the wake-up word to perform the speech recognition on the audio clip. In the first operation state, audio is continuously acquired to obtain the audio stream to perform the speech recognition on the audio stream. Consequently, the user may set a scene for triggering the first operation state based on his/her needs, to meet individual requirements of users. In addition, the device is controlled to enter the first operation state in response to detecting that the first operation state is applicable to the target scene, thereby reducing disturbance to the user and improving the uses experience.

As a possible implementation, in a case where the first operation state is applicable to the target scene, it is necessary to determine whether the intention of the audio clip following the wake-up word matches the target scene. In a case where the intention of the audio clip matches the target scene, the second operation state that the electronic device is in may be switched to the first operation state. In a case where the intention of the audio clip does not match the target scene, the electronic device maintains the second operation state. Therefore, when the control intention matching the target scene is input, the operation state of the electronic device is switched, thereby reducing disturbance to the user. The above process will be described in detail below.

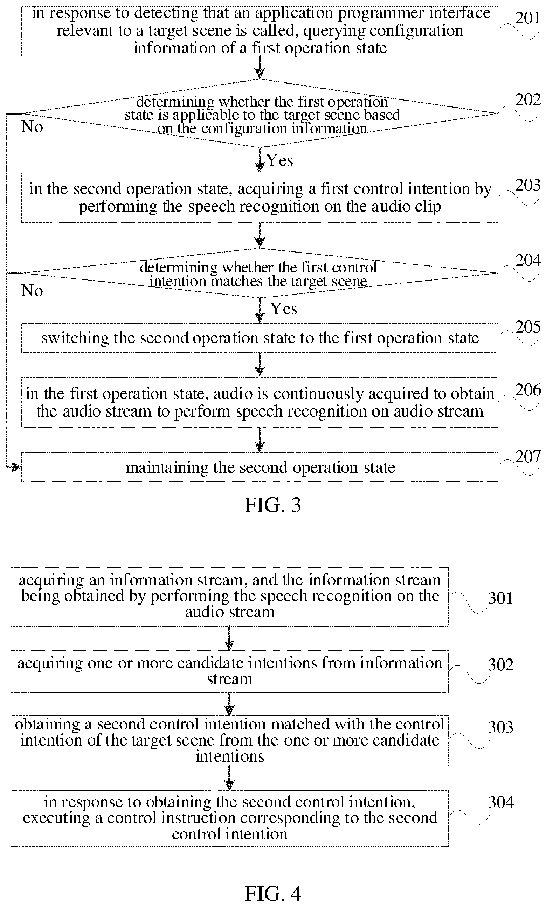

FIG. 3 is a flowchart illustrating a speech recognition control method according to some embodiments of the present disclosure.

As illustrated in FIG. 3, the speech recognition control method may include the following.

At block 201, the configuration information of the first operation state is queried, in response to detecting that the application programmer interface relevant to the target scene is called.

At block 202, it is determined whether the first operation state is applicable to the target scene based on the configuration information. In a case where the first operation state is applicable to the target scene, a block 203 is executed. In a case where the first operation state is not applicable to the target scene, a block 207 is executed.

For execution processes of blocks 201 to 202, reference may be made to the execution process of block 101 above, and thus details will not be repeated herein.

At block 203, in the second operation state, a first control intention is obtained by performing the speech recognition on the audio clip.

In the second operation state, the audio clip is acquired based on the wake-up word, and the speech recognition is performed on the audio clip.

In an example, in the second operation state, the speech recognition control apparatus may be configured to detect whether the wake-up word is input. In a case where the wake-up word is input, the speech recognition control apparatus may be configured to acquire the audio clip following the wake-up word and perform the speech recognition on the audio clip to obtain the first control intention corresponding to the audio clip. For example, the audio clip may be recognized using speech recognition technology to determine text information corresponding to the audio clip. The text information may be semantically recognized to determine the first control intention. For example, the audio clip may be "I want to listen to a song", the intention of the audio clip may be "listening to a song" or "playing an audio".

At block 204, it is determined whether the first control intention matches the target scene. In a case where the first control intention matches the target scene, blocks 205 to 206 may be executed. In a case where the first control intention does not match the target scene, a block 207 may be executed.

In an example, the first control intention and the control intention of the target scene may be semantically matched with each other to determine whether the first control intention matches the target scene.

At block 205, the second operation state executed is switched to the first operation state.

In an example, when the first operation state is applicable to the target scene and the intention of the audio clip matches the target scene, the second operation state is switched to the first operation state. Therefore, the operation state of the electronic device may be switched when the intention of the audio clip input by the user matches the target scene, to further reduce disturbance to the user.

In an example, the electronic device may be the smart speaker and the target scene may be the video scene. In response to detecting that the user inputs "Xiaodu, Xiaodu, I want to listen to songs" in voice, the smart speaker may determine that the first control intention corresponding to the audio clip "I want to listen to songs" may be "playing an audio" after acquiring and recognizing the audio clip input by the user. However, the control intention corresponding to the target scene is "playing a video". In this case, it may be determined that the first control intention does not match the target scene. Therefore. the smart speaker may be controlled to maintain the second operation state. In another example, in response to detecting that the user inputs "Xiaodu, Xiaodu, play movie A" in voice, the smart speaker may determine that the first control intention corresponding to the audio clip "play movie A" is "playing a video" after acquiring and recognizing the audio clip input by the user. The control intention corresponding to the target scene is also "playing a video". In this case, it may be determined that the first control intention matches the target scene. Therefore, the smart speaker may be controlled to switch the second operation state to the first operation state, such that in the first operation state, the user may continuously interact with the smart speaker, such as inputting "play a martial arts movie", "stop playing", etc., thereby making the human-machine conversation natural and real, and improving the immersive experience of the user.

At block 206, in the first operation state, audio is continuously acquired to obtain the audio stream to perform the speech recognition on the audio stream.

At block 207, the second operation state is maintained.

In the present disclosure, in a case where the first operation state is not applicable to the target scene or the intention of the audio clip does not match the target scene although the first operation state is applicable to the target scene, the second operation state may be maintained. Thus, it is possible to further reduce disturbance to the user.

For example, in a case where the configuration information of the first operation state indicates that the list of scenes that the first operation state is applicable to includes the video scene, even if the intention of the audio clip input by the user matches the video scene, the electronic device may be not controlled to enter the first operation state when the first operation state is not applicable to the target scene. For example, when a weather application (APP) is launched, the target scene corresponding to the application programmer interface is the weather scene. The weather scene does not match the video scene, indicating that the user does not have the need to continuously interact with the electronic device. In this case, the electronic device is not controlled to enter the first operation state, thereby reducing disturbance to the user.

As a possible implementation, in order to further reduce disturbance to the user, in the first operation state, during the real-time interaction between the user and the electronic device, when the intention of the audio data input by the user matches the target scene, the control instruction corresponding to the intention of the audio data may be executed. The above process will be described in detail below.

FIG. 4 is a flowchart illustrating a speech recognition control method according to some embodiments of the present disclosure.

As illustrated in FIG. 4, based on FIG. 1, after the block 103, the speech recognition control method may further include the following.

At block 301, an information stream is acquired. The information stream is obtained by performing the speech recognition on the audio stream.

In an example, after the audio data is input by the user, the speech recognition control apparatus may be configured to acquire the audio stream and perform the speech recognition on the audio stream to determine the information stream.

At block 302, one or more candidate intentions are acquired from the information stream.

In an example, after the information stream is obtained, the information stream may be semantically recognized to determine the one or more candidate intentions.

At block 303, a second control intention matched with the control intention of the target scene is obtained from the one or more candidate intentions.

At block 304, in a case where the second control intention is obtained, a control instruction corresponding to the second control intention is executed.

In an example, each of the one or more candidate intentions may be semantically matched with the control intention of the target scene. In a case where a candidate intention matches the control intention of the target scene, the candidate intention may be determined as the second control intention and the control instruction corresponding to the second control intention may be executed.

For example, the target scene may be the video scene and the control intention corresponding to the target scene may be "playing a video". In a case where the information stream is "I want to watch movie A", it may be determined that the information stream carries one candidate intention of "playing a video". In this case, the control instruction corresponding to the candidate intention may be executed. That is, the electronic device is controlled to play the movie A.

With the speech recognition control method according to embodiments of the present disclosure, in the first operation state, during the real-time interaction between the user and the electronic device, the control instruction corresponding to the intention of the audio data may be executed when the intention of the audio data input by the user matches the target scene, thereby further reducing disturbance to the user.

As a possible implementation, in a case where the second control intention is not obtained within a preset duration, it may be indicated that the user does not have an intention to control the electronic device. In this case, in order to reduce power consumption of the electronic device and to prevent the electronic device from being maintained in the first operation state, the first operation state may be quitted.

The preset duration may be set in advance. For example, the preset duration may be set by a built-in program of the electronic device in advance, or may be set by the user, which is not limited in the present disclosure. For example, the preset duration may range from 20 seconds to 40 seconds.

As a possible implementation, after each candidate intention is obtained from the information stream, in a case where a candidate intention does not match the control intention of the target scene, the electronic device may ignore the candidate intention, thereby reducing disturbance to the user.

For example, in the video scene, in response to detecting that the audio data input by the user is "Well, song A of this movie is pretty good. I will listen to the song A again later", the electronic device may perform the speech recognition on the audio data and determines that the intention corresponding to the audio data is "playing a song". The intention does not match the control intention "playing a video" corresponding to the video scene. In order to reduce disturbance to the user, the electronic device may refuse to respond to the intention corresponding to the audio data.

In other words, in a case where the electronic device is in the first operation state, the electronic device may responds to the intention corresponding to the audio data when the intention of the audio data input by the user matches the control intention of the target scene, to reduce to disturb the user.

In order to implement the above, the present disclosure further proposes a speech recognition control method.

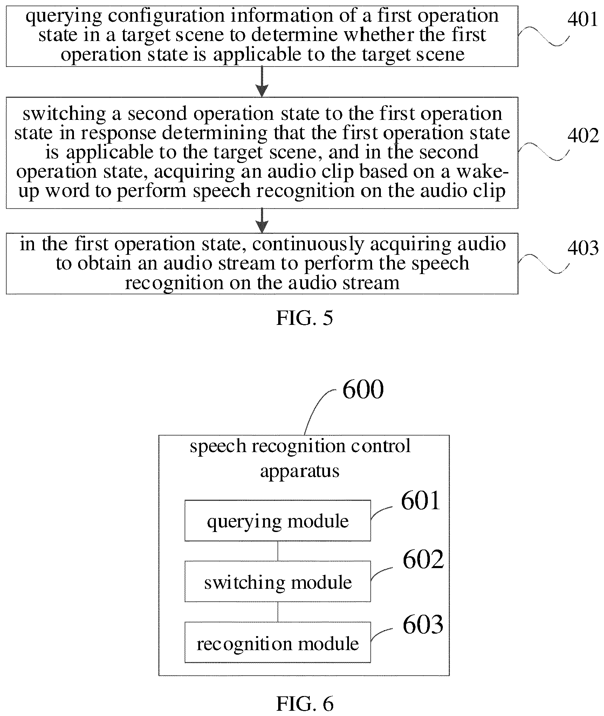

FIG. 5 is a flowchart illustrating a speech recognition control method according to some embodiments of the present disclosure.

As illustrated in FIG. 5, the speech recognition control method may include the following.

At block 401, the configuration information of the first operation state is queried in the target scene, to determine whether the first operation state is applicable to the target scene.

In an example, the target scene may correspond to an interface currently displayed by the electronic device, for example including a weather scene, a music scene, a video scene and the like.

In an example, the first operation state may be the listening state. In a case where the electronic device is in the listening state, the user may input the speech instruction in real time to interact with the electronic device, without inputting the wake-up word. The configuration information of the first operation state may be set by the user based on his/her needs. The configuration information may include the list of scenes that the first operation state is applicable to. The list of scenes may be generated by selecting one or more from various scenes in response to the user selection. For example, the list of scenes may be generated, in response to the user selection, by selecting one or more of the music scene, the audiobook scene, the video scene, the weather scene, the shopping scene, and the like.

In an example, when the user opens an interface, the speech recognition apparatus may determine the target scene corresponding to the interface. For example, when the user opens a video application, the target scene may be determined as the video scene. In another example, when the user opens a music application, the target scene may be determined as the music scene. In still another example, when the user opens a weather querying interface, the target scene may be determined as the weather scene. No more similar examples are given herein.

In the present disclosure, in the target scene, the speech recognition control apparatus may query the configuration information of the first operation state to determine whether the first operation state is applicable to the target scene. In detail, in a case where the configuration information indicates that the list of scenes that the first operation state is applicable to includes the target scene, it may be determined that the first operation state is applicable to the target scene. In a case where the configuration information indicates that the list of scenes that the first operation state that the first operation state is not applicable to does not include the target scene, it may be determined that the first operation state is not applicable to the target scene.

As an example, referring to FIG. 2, Fig. 2 is a schematic diagram illustrating a configuration interface according to some embodiments of the present disclosure. The user may select a scene from the music scene, the audiobook scene and the video scene based on his/her needs to generate the list of scenes that the first operation state is applicable to. In a case where the user selects the music scene and the video scene, the list of scenes that the first operation state is applicable to includes the music scene and the video scene. When the target scene is the music scene, it may be determined that the first operation state is applicable to the target scene by querying the configuration information of the first operation state.

It should be noted that FIG. 2 is merely an example. That is, a case that the list of scenes is generated by selecting one or more from the music scene, the audiobook scene and the video scene is merely an example. In other words, FIG. 2 only takes the list of scenes including at least one of the music scene, the audiobook scene and the video scene as an example. In actual applications, the list of scenes may include other scenes, such as the weather scene, the shopping scene, and the like, which is not limited herein.

At block 402, the second operation state is switched to the first operation state, in response to detecting that the first operation state is applicable to the target scene. In the second operation state, the audio clip is acquired based on the wake-up word to perform the speech recognition on the audio clip.

In an example, the second operation state may be the non-listening state. In a case where the electronic device is in the non-listening state, the user may input the wake-up word in voice to wake up the electronic device for the subsequent speech recognition. The wake-up word may be preset by a built-in program of the electronic device, or in order to meet personalized needs of the user, the wake-up word may be set by the user based on his/her needs, which is not limited in the present disclosure. For example, the electronic device may be the smart speaker, and the wake-up word may be "Xiaodu, Xiaodu".

In the present disclosure, when the electronic device is in the second working state, the speech recognition control apparatus may be configured to detect whether the wake-up word is input. In a case where the wake-up word is input, the speech recognition control apparatus may be configured to acquire the audio clip following the wake-up word to perform the speech recognition. For example, the electronic device may be the smart speaker in the second operation state, when the user wants to play a song via the electronic device, the user may input "Xiaodu, Xiaodu, play song A" or "Xiaodu, Xiaodu, I want to listen to a song" in voice. The electronic device may be configured to recognize the audio clip "play song A" or "I want to listen to a song" following the wake-up word, and play the song.

In the present disclosure, in response to detecting by the speech recognition apparatus that the first operation state is applicable to the target scene, the second operation state may be switched to the first operation state. In response to determining by the speech recognition apparatus that the first operation state is not applicable to the target scene, the second operation state may be maintained. Therefore, the user may set the scene for triggering the first operation state based on his/her needs to meet personalized needs of users. In addition, the device may be controlled to enter the first operation state when the first operation state is applicable to the target scene, thereby reducing disturbance to the user and improving the user experience.

At block 403, in the first operation state, audio is continuously acquired to obtain the audio stream to perform the speech recognition on the audio stream.

In an example, in a case where the electronic device is in the first operation state, the electronic device may be configured to continuously acquire the audio to obtain the audio stream for speech recognition. Therefore, in the first operation state, the user may interact in real time or continuously with the electronic device, without inputting the wake-up word, which may simplify operations and improve the user experience.

With the speech recognition control method according to embodiments of the present disclosure, the configuration information of the first operation state is queried in the target scene, to determine whether the first operation state is applicable to the target scene. The second operation state is switched to the first operation state, in a case where the first operation state is applicable to the target scene. In the second operation state, the audio clip is acquired based on the wake-up word to perform the speech recognition on the audio clip. In the first operation state, the audio is continuously acquired to obtain the audio stream to perform the speech recognition on the audio stream. Consequently, the user may set a scene for triggering the first operation state based on his/her requirement to meet individual requirements of users. In addition, the device is controlled to enter the first operation state when the first operation state is applicable to the target scene. Consequently, the disturbance to the user may be reduced, and the user experience may be improved.

To implement the above, the present disclosure further provides a speech recognition control apparatus.

FIG. 6 is a block diagram illustrating a speech recognition control apparatus according to some embodiments of the present disclosure.

As illustrated in FIG. 6, the speech recognition control apparatus 600 may include a querying module 601, a switching module 602 and a recognition module 603.

The querying module 601 may be configured to, in response to detecting that an application programmer interface relevant to a target scene is called, query configuration information of a first operation state to determine whether the first operation state is applicable to the target scene.

The switch module 602 may be configured to switch the second operation state to the first operation state in response to detecting that the first operation state is applicable to the target scene. In the second operation state, the audio clip is acquired based on the wake-up word to perform the speech recognition on the audio clip.

The recognition module 603 may be configured to, in the first operation state, continuously acquire audio to obtain the audio stream to perform the speech recognition on the audio stream.

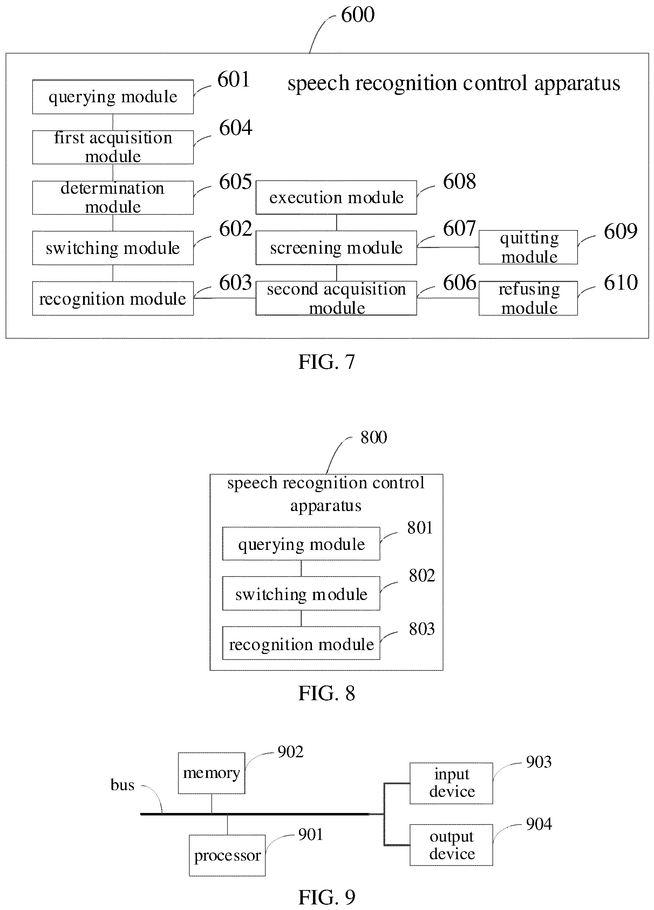

Further, in an possible implementation of the present disclosure, as illustrated in FIG. 7, on the basis of FIG. 6, the speech recognition control apparatus 600 may further include: a first acquisition module 604, a determination module 605, a second acquisition module 606, a screening module 607, an execution module 608, a quitting module 609 and a refusing module 610.

The first acquisition module 604 may be configured to, in the second operation state, acquire a first control intention by performing the speech recognition on the audio clip.

The determination module 605 may be configured to determine that the first control intention matches the target scene.

The second acquisition module 606 may be configured to acquire an information stream and acquire one or more candidate intentions from the information stream. The information stream is obtained by performing the speech recognition on the audio stream.

The screening module 607 may be configured to obtain a second control intention matched with the control intention of the target scene from the one or more candidate intentions.

The execution module 608 may be configured to, in response to obtaining the second control intention, execute the control instruction corresponding to the second control intention.

The quitting module 609 may be configured to, in response to not obtaining the second control intention within a preset duration, quit the first operation state. The preset duration ranges from 20 seconds to 40 seconds.

The refusing module 610 may be configured to refuse to respond to the candidate intention that do not match the control intention of the target scene.

As a possible implementation, the configuration information may include a list of scenes that the first operation state is applicable to. The list of scenes may be generated by selecting one or more from the music scene, the audiobook scene and the video scene in response to user selection.

It should be noted that the explanation of the speech recognition control method as illustrated in FIGS. 1 to 4 is also applicable to the speech recognition control apparatus, and details will not be described herein again.

With the speech recognition control apparatus according to embodiments of the present disclosure, in response to detecting that the application programmer interface relevant to the target scene is called, the configuration information of the first operation state is queried to determine whether the first operation state is applicable to the target scene. The second operation state is switched to the first operation state in response to determining that the first operation state is applicable to the target scene. In the second operation state, the audio clip is acquired based on the wake-up word to perform the speech recognition on the audio clip. In the first operation state, the audio is continuously acquired to obtain the audio stream to perform the speech recognition on the audio stream. Consequently, the user may set a scene for triggering the first operation state based on his/her requirement to meet individual requirements of users. In addition, the device may be controlled to enter the first operation state when the first operation state is applicable to the target scene, thereby reducing disturbance to the user and improving the uses experience.

To implement the above, the present disclosure further provides a speech recognition control apparatus.

FIG. 8 is a block diagram illustrating a speech recognition control apparatus according to some embodiments of the present disclosure.

As illustrated in FIG. 8, the speech recognition control apparatus 800 may include: a querying module 801, a switching module 802 and a recognition module 803.

The querying module 801 may be configured to query the configuration information of the first operation state in the target scene to determine whether the first operation state is applicable to the target scene.

The switching module 802 may be configured to switch the second operation state to the first operation state in response to determining that the first operation state is applicable to the target scene. In the second operation state, the audio clip is acquired based on the wake-up word to perform the speech recognition on the audio clip.

The recognition module 803 may be configured to, in the first operation state, continuously acquire the audio to obtain the audio stream to perform the speech recognition on the audio stream.

It should be noted that the explanation of the speech recognition control method illustrated in FIG. 5 is also applicable to the speech recognition control apparatus, and details will not be described herein again.

With the speech recognition control apparatus according to embodiments of the present disclosure, the configuration information of the first operation state is queried in the target scene, to determine whether the first operation state is applicable to the target scene. The second operation state is switched to the first operation state in response to determining that the first operation state is applicable to the target scene. In the second operation state, the audio clip is acquired based on the wake-up word to perform the speech recognition on the audio clip. In the first operation state, the audio is continuously acquired to obtain the audio stream to perform the speech recognition on the audio stream. Therefore, the user may set a scene for triggering the first operation state based on his/her requirement to meet individual requirements of users. In addition, the device may be controlled to enter the first operation state in response to determining that the first operation state is applicable to the target scene. Consequently, the disturbance to the user may be reduced and the user experience may be improved.

To implement the above, the present disclosure further provides an electronic device. The electronic device may include: at least one processor, and a memory connected in communication with the at least one processor. The memory is configured to store instructions executable by the at least one processor. The instructions are executed by the at least one processor, such that the at least one processor is configured to execute the speech recognition control methods described above.

To implement the above embodiment, the present disclosure further provides a non-transitory computer-readable storage medium, having computer instructions stored thereon. The computer instructions are executed by a computer, such that the computer is configured to execute the speech recognition control methods as described above.

According to the present disclosure, the present disclosure further provides an electronic device and a readable storage medium.

FIG. 9 is a block diagram of an electronic device for a speech recognition control method according to embodiments of the present disclosure. The electronic device may be intended to represent various forms of digital computers, such as a laptop computer, a desktop computer, a workbench, a personal digital assistant, a server, a blade server, a mainframe computer and other suitable computers. The electronic device may also represent various forms of mobile devices, such as a personal digital processor, a cellular phone, a smart phone, a wearable device and other similar computing devices. Components shown herein, their connections and relationships as well as their functions are merely examples, and are not intended to limit the implementation of the present disclosure described and/or required herein.

As illustrated in FIG. 9, the electronic device includes: one or more processors 901, a memory 902, and interfaces for connecting various components, including a high-speed interface and a low-speed interface. The components are interconnected by different buses and may be mounted on a common motherboard or otherwise installed as required. The processor may process instructions executed within the electronic device, including instructions stored in or on the memory to display graphical information of the GUI on an external input/output device (such as a display device coupled to the interface). In other embodiments, when necessary, multiple processors and/or multiple buses may be used with multiple memories at the same time. Similarly, multiple electronic devices may be connected, each providing some of the necessary operations (for example, as a server array, a group of blade servers, or a multiprocessor system). One processor 901 is taken as an example in FIG. 9.

The memory 902 is a non-transitory computer-readable storage medium according to the present disclosure. The memory stores instructions executable by at least one processor, so that the at least one processor executes the speech recognition control method according to the present disclosure. The non-transitory computer-readable storage medium according to the present disclosure stores computer instructions, which are configured to make the computer execute the speech recognition control method according to the present disclosure.

As a non-transitory computer-readable storage medium, the memory 902 may be configured to store non-transitory software programs, non-transitory computer executable programs and modules, such as program instructions/modules (for example, the detection module 601, the execution module 602 and the obtaining module 603 shown in FIG. 6) corresponding to the speech recognition control method according to the embodiment of the present disclosure. The processor 901 executes various functional applications and performs data processing of the server by running non-transitory software programs, instructions and modules stored in the memory 902, that is, the speech recognition control method according to the foregoing method embodiments is implemented.

The memory 902 may include a storage program area and a storage data area, where the storage program area may store an operating system and applications required for at least one function; and the storage data area may store data created according to the use of the electronic device, and the like. In addition, the memory 902 may include a high-speed random access memory, and may further include a non-transitory memory, such as at least one magnetic disk memory, a flash memory device, or other non-transitory solid-state memories. In some embodiments, the memory 902 may optionally include memories remotely disposed with respect to the processor 901, and these remote memories may be connected to the electronic device through a network. Examples of the network include, but are not limited to, the Internet, an intranet, a local area network, a mobile communication network, and combinations thereof.

The electronic device may further include an input device 903 and an output device 904. The processor 901, the memory 902, the input device 903 and the output device 904 may be connected through a bus or in other manners. FIG. 9 is illustrated by establishing the connection through a bus.

The input device 903 may receive input numeric or character information, and generate key signal inputs related to user settings and function control of the electronic device, such as a touch screen, a keypad, a mouse, a trackpad, a touchpad, a pointing stick, one or more mouse buttons, trackballs, joysticks and other input devices. The output device 904 may include a display device, an auxiliary lighting device (for example, an LED), a haptic feedback device (for example, a vibration motor), and so on. The display device may include, but is not limited to, a liquid crystal display (LCD), a light emitting diode (LED) display and a plasma display. In some embodiments, the display device may be a touch screen.

Various implementations of systems and technologies described herein may be implemented in digital electronic circuit systems, integrated circuit systems, application-specific ASICs (application-specific integrated circuits), computer hardware, firmware, software, and/or combinations thereof. These various implementations may include: being implemented in one or more computer programs that are executable and/or interpreted on a programmable system including at least one programmable processor. The programmable processor may be a dedicated or general-purpose programmable processor that may receive data and instructions from a storage system, at least one input device and at least one output device, and transmit the data and instructions to the storage system, the at least one input device and the at least one output device.

These computing programs (also known as programs, software, software applications, or codes) include machine instructions of a programmable processor, and may implement these calculation procedures by utilizing high-level procedures and/or object-oriented programming languages, and/or assembly/machine languages. As used herein, terms "machine-readable medium" and "computer-readable medium" refer to any computer program product, device and/or apparatus configured to provide machine instructions and/or data to a programmable processor (for example, a magnetic disk, an optical disk, a memory and a programmable logic device (PLD)), and includes machine-readable media that receive machine instructions as machine-readable signals. The term "machine-readable signals" refers to any signal used to provide machine instructions and/or data to a programmable processor.

In order to provide interactions with the user, the systems and technologies described herein may be implemented on a computer having: a display device (for example, a cathode ray tube (CRT) or a liquid crystal display (LCD) monitor) for displaying information to the user; and a keyboard and a pointing device (such as a mouse or trackball) through which the user may provide input to the computer. Other kinds of devices may also be used to provide interactions with the user; for example, the feedback provided to the user may be any form of sensory feedback (e.g., visual feedback, auditory feedback or haptic feedback); and input from the user may be received in any form (including acoustic input, voice input or tactile input).

The systems and technologies described herein may be implemented in a computing system that includes back-end components (for example, as a data server), a computing system that includes middleware components (for example, an application server), or a computing system that includes front-end components (for example, a user computer with a graphical user interface or a web browser, through which the user may interact with the implementation of the systems and technologies described herein), or a computing system including any combination of the back-end components, the middleware components or the front-end components. The components of the system may be interconnected by digital data communication (e.g., a communication network) in any form or medium. Examples of the communication network include: a local area network (LAN), a wide area network (WAN), and the Internet.

Computer systems may include a client and a server. The client and server are generally remote from each other and typically interact through the communication network. A client-server relationship is generated by computer programs running on respective computers and having a client-server relationship with each other.

According to the present disclosure, the configuration information of the first operation state is queried in response to detecting that the application programmer interface relevant to the target scene is called to determine whether the first operation state is applicable to the target scene. The second operation state is switched to the first operation state in response to determining that the first operation state is applicable to the target scene. In the second operation state, the audio clip is acquired based on the wake-up word to perform the speech recognition on the audio clip. In the first operation state, the audio is continuously acquired to obtain the audio stream to perform the speech recognition on the audio stream. Consequently, the user may set a scene for triggering the first operation state based on his/her requirement to meet individual requirements of users. In addition, the device is controlled to enter the first operation state in response to determining that the first operation state is applicable to the target scene. Therefore, the disturbance to the user may be reduced and the user experience may be improved.

It should be understood that various forms of processes shown above may be reordered, added or deleted. For example, the blocks described in the present disclosure may be executed in parallel, sequentially, or in different orders. As long as the desired results of the technical solutions disclosed in the present disclosure may be achieved, there is no limitation herein.

The foregoing specific implementations do not constitute a limit on the protection scope of the present disclosure. It should be understood by those skilled in the art that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A speech recognition control method, comprising:
querying (101) configuration information of a first operation state to determine whether the first operation state is applicable to a target scene;
switching (102; 402) a second operation state to the first operation state in response to determining that the first operation state is applicable to the target scene; wherein, in the second operation state, an audio clip is acquired based on a wake-up word to perform speech recognition on the audio clip; and
in the first operation state, continuously acquiring (103; 403) audio to obtain an audio stream to perform the speech recognition on the audio stream.

2. The speech recognition control method according to claim 1, further comprising:
detecting whether an application programmer interface relevant to the target scene is called, and in response to detecting that the application programmer interface is called, querying the configuration information of the first operation state; or
determining whether the target scene is detected, and querying the configuration information of the first operation state, in response to detecting the target scene.

3. The speech recognition control method according to claim 1 or 2, further comprising:
in the second operation state, acquiring (203) a first control intention by performing the speech recognition on the audio clip; and
determining (204) whether the first control intention matches the target scene.

4. The speech recognition control method according to any one of claims 1 to 3, further comprising:
acquiring (301) an information stream; wherein, the information stream is obtained by performing the speech recognition on the audio stream;
acquiring (302) one or more candidate intentions from the information stream;
obtaining (303) a second control intention matched with the control intention of the target scene from the one or more candidate intentions; and
in response to obtaining the second control intention, executing (304) a control instruction corresponding to the second control intention.

5. The speech recognition control method according to claim 4, further comprising:
in response to not obtaining the second control intention within a preset duration, quitting the first operation state;
wherein, the preset duration ranges from 20 seconds to 40 seconds.

6. The speech recognition control method according to claim 4 or 5, further comprising:
refusing to respond to a candidate intention that does not match the control intention of the target scene.

7. The speech recognition control method according to any one of claims 1 to 6, wherein the configuration information comprises a list of scenes that the first operation state is applicable to, and the list of scenes is generated by selecting one or more of a music scene, an audiobook scene and a video scene, in response to user selection.

8. A speech recognition control apparatus (600; 800), comprising:
a querying module (601; 801), configured to, query configuration information of a first operation state to determine whether the first working state is applicable to a target scene;
a switching module (602; 802), configured to switch a second operation state to the first operation state in response to determining that the first operation state is applicable to the target scene; wherein, in the second operation state, an audio clip is acquired based on a wake-up word to perform speech recognition on the audio clip; and
a recognition module (603; 803), configured to, in the first operation state, continuously acquire audio to obtain an audio stream to perform the speech recognition on the audio stream.

9. The speech recognition control apparatus (600; 800) according to claim 7, wherein the querying module (601; 801) is further configured to:
detect whether an application programmer interface relevant to the target scene is called, and in response to detecting that the application programmer interface is called, query the configuration information of the first operation state; or
determine whether the target scene is detected, and query the configuration information of the first operation state, in response to detecting the target scene.

10. The speech recognition control apparatus (600; 800) according to claim 8 or 9, further comprising:
a first acquisition module (604), configured to, in the second operation state, acquire a first control intention by performing the speech recognition on the audio clip; and
a determination module (605), configured to determine whether the first control intention matches the target scene.

11. The speech recognition control apparatus (600; 800) according to any one of claims 8 to 10, further comprising:
a second acquisition module (606), configured to acquire an information stream and acquire one or more candidate intentions from the information stream; wherein, the information stream is obtained by performing the speech recognition on the audio stream;
a screening module (607), configured to obtain a second control intention matched with the control intention of the target scene from the one or more candidate intentions; and
an execution module (608), configured to, in response to obtaining the second control intention, execute a control instruction corresponding to the second control intention.

12. The speech recognition control apparatus (600; 800) according to claim 11, further comprising:
a quitting module (609), configured to, in response to not obtaining the second control intention within a preset duration, quit the first operation state;
wherein, the preset duration ranges from 20 seconds to 40 seconds.

13. The speech recognition control apparatus (600; 800) according to claim 11 or 12, further comprising:
a refusing module (610), configured to refuse to respond to a candidate intention that does not match the control intention of the target scene.

14. The speech recognition control apparatus (600; 800) according to any one of claims 8 to 13, wherein the configuration information includes a list of scenes that the first operation state is applicable to, and the list of scenes is generated by selecting one or more of a music scene, an audiobook scene and a video scene, in response to user selection.

15. A non-transitory computer-readable storage medium, having computer instructions stored thereon, wherein the computer instructions are executed by a computer such that the computer is configured to execute a speech recognition control method according to any one of claims 1 to 7.
